(19) Europäisches Patentamt
European Patent Office
Office européen des brevets

(11) **EP 4 612 811 B1**

(12) **EUROPEAN PATENT SPECIFICATION**

(45) Date of publication and mention
of the grant of the patent:
**22.07.2026  Bulletin 2026/30**

(21) Application number: **22829641.4**

(22) Date of filing: **04.11.2022**

(51) International Patent Classification (IPC):
*H04B 17/12* $^{(2015.01)}$       *H04B 17/21* $^{(2015.01)}$

(52) Cooperative Patent Classification (CPC):
**H04B 17/12; H04B 17/221**

(86) International application number:
**PCT/CN2022/129833**

(87) International publication number:
**WO 2024/092710 (10.05.2024 Gazette 2024/19)**

(54) **NETWORK NODE AND METHOD FOR ESTIMATING ANTENNA CALIBRATION ERROR**

NETZWERKKNOTEN UND VERFAHREN ZUR SCHÄTZUNG EINES
ANTENNENKALIBRIERUNGSFEHLERS

NOEUD DE RÉSEAU ET PROCÉDÉ PERMETTANT D'ESTIMER UNE ERREUR D'ÉTALONNAGE
D'ANTENNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**10.09.2025  Bulletin 2025/37**

(73) Proprietor: **Telefonaktiebolaget LM Ericsson
(publ)
164 83 Stockholm (SE)**

(72) Inventors:
• **ZHANG, Hao
Guangzhou, Guangdong, 510630 (CN)**
• **BRAUN, Christian
186 53, Vallentuna (SE)**
• **HU, Xiaohui
Beijing (CN)**
• **YU, Jing
187 65 Täby (SE)**
• **FENG, Ang
169 56 Solna (SE)**

(74) Representative: **Ericsson
Patent Development
Torshamnsgatan 21-23
164 80 Stockholm (SE)**

(56) References cited:
• **GUVENC I ET AL: "A Survey on TOA Based
Wireless Localization and NLOS Mitigation
Techniques", IEEE COMMUNICATIONS
SURVEYS & TUTORIALS, IEEE, USA, vol. 11, no.
3, 1 October 2009 (2009-10-01), pages 107 - 124,
XP011272510, ISSN: 1553-877X, DOI: 10.1109/
SURV.2009.090308**
• **SHAOHUA WU ET AL: "NLOS Error Mitigation for
UWB Ranging in Dense Multipath
Environments", IEEE WIRELESS
COMMUNICATIONS AND NETWORKING
CONFERENCE, 2007, WCNC 2007, 11 - 15
MARCH 2007, HONG KONG, IEEE OPERATIONS
CENTER, PISCATAWAY, NJ, 1 March 2007
(2007-03-01), pages 1565 - 1570, XP031097433,
ISBN: 978-1-4244-0658-6**

**Description**

TECHNICAL FIELD

Embodiments herein relate to estimating antenna calibration error. In particular, they relate to a network node and method therein for estimating antenna calibration error of a plurality of antennas in a wireless communication system.

BACKGROUND

A radio unit in a wireless communication system usually comprise transceivers which comprise receivers and transmitters. The transmitters typically up-convert baseband signals to Radio Frequency (RF) signals for transmission, and the receivers down-convert received RF signals to baseband signals for processing.

The transmitter and receiver in the radio unit usually use multiple antennas to perform beamforming to enhance coverage and capacity. Multiple antennas can significantly increase the data rates and reliability of a wireless communication system. The performance is improved if both the transmitter and the receiver are equipped with multiple antennas, which results in a Multiple-Input Multiple-Output (MIMO) communication channel.

Accurate beamforming relies on the multiple antennas having a closely synchronized amplitude and phase. To achieve this, the multiple antennas must be continuously calibrated while the radio unit is in use.

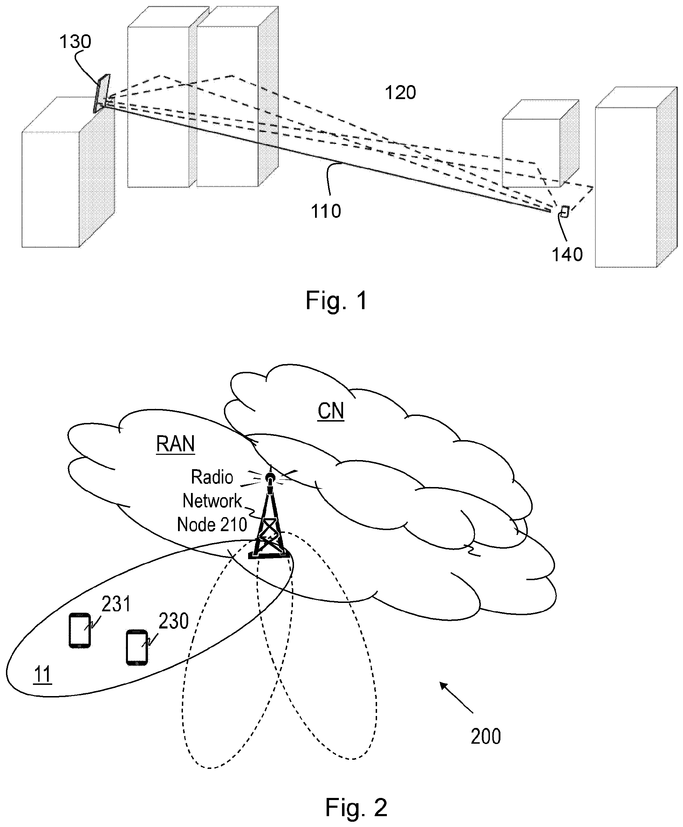

In the wireless communication system, a favorable situation is that the transmitter and the receiver can "see" each other, and the information can be conveyed by a link or path connecting both sides without any obstacle in between. This is called line-of-sight (LOS) communication, if so, the communication system can be simplified with only a few key components. However, it is not true in the realistic wireless environment. Basically, the electromagnetic wave may encounter reflection, diffraction, or scattering due to ambient obstacles such as buildings and trees. For millimeter and terahertz frequency bands, even small particles such as rains can block the direct link between two sides. In such circumstance, LOS path may not be available. The information has to be conveyed through non-line-of-sight (NLOS) paths. **Figure 1** illustrates a typical environment for wireless communication with both LOS path, indicated by solid line **110,** and NLOS paths indicated by dotted lines **120,** between a network node **130** such as a base-station (BS), and a user equipment (UE) **140.** The resulting effect is referred to as multipath propagation or multipath fading, and which is the main topic of wireless communication research.

It is worth noting that even in LOS communication, more or less the received signal may contain some components from NLOS paths. It is just a matter of how much they are compared to that from LOS path. Meanwhile, NLOS doesn't mean to be bad for the performance. Conversely, modern communication systems are able to exploit NLOS paths to achieve diversity gain to strengthen received power or flatten channel variations.

On the other hand, radio signals are not just used for communication. They are also widely used for other applications, such as positioning, synchronization, sensing and so forth. In these applications, NLOS is normally hostile that may deteriorate the performance dramatically. To this end, NLOS mitigation must be introduced to remove the impact of NLOS paths meanwhile keeping a clean LOS path. In I. Guvenc and C.-C. Chong, "A Survey on TOA Based Wireless Localization and NLOS Mitigation Techniques," IEEE Communications Surveys Tutorials, vol. 11, no. 3, pp. 107-124, 2009, different NLOS mitigation technologies are summarized, and their complexity and performance are compared.

In addition to above applications, radio signals can also be used for over-the-air (OTA) antenna calibration (AC), which is known as in-field AC, for active antenna system (AAS).

To enable beamforming, multiple antennas as well as their connected RF components should be aligned coherently. However, there is impairment between multiple antennas, e.g., the impairment might be caused by unsynchronized phase-locked loop (PLL) among transceivers, or different delays introduced in such as layout of RF circuit board, filter units, isolators and antennas, etc. In order to compensate such impairment, antenna calibration (AC) is used. AC is a typical method to compensate the impairment of above-mentioned radio hardware. AC is a software function that can estimate and compensate the hardware imperfections, in which Reference Signal (RS) is transmitted and received via additional coupler network (CN), or Mutual Coupling (MC) between antennas. Ideally, proper hardware design as well as AC function can realize coherent transmitting/receiving of multiple antennas, thereby guaranteeing beamforming working as expected.

In general, the AC methods in prior art are not accurate enough. There is a deviation between the impairment compensated by AC and the actual impairment. For this reason, the deviation between the impairment compensated by AC and the actual impairment needs to be further estimated and compensated. Such deviation is called AC error in this application.

Moreover, the AC methods in prior art also suffer from the impairment due to NLOS paths. There are many NLOS mitigations addressed in the article of I. Guvenc and C.-C. Chong mentioned above. However, they are not suitable for in-field AC. This is because the AC error, that is the expected value for AC function, is always intertwined with impacts of NLOS paths. Generally, if the impacts of NLOS paths are not mitigated, the AC error is also changed. Consequently, that leads to wrong result in AC estimation.

SUMMARY

It is therefore an object of embodiments herein to provide an improved method for antenna calibration in a wireless communication system.

It is realized that the impacts of NLOS paths have major contribution on the AC error. A solution leveraging the reference signal between a UE and a BS may be used for AC. A coherent combining method may also be used for multiple UEs which can mitigate the impairment by exploiting the non-correlation of NLOS paths between UEs. Although the impacts of NLOS paths may be mitigated effectively, the converging rate is very slow in which typically tens of UEs are required to meet the requirement. This is problematic at the initialization stage, and especially hard in a cell served by a network node that doesn't contain too many reliable UEs.

In wireless communications, channel-state information (CSI) refers to the channel properties of a communication link. This information describes how a signal propagates from the transmitter to the receiver and represents the combined effect of, for example, scattering, fading, and power decay with distance. In the multiple propagation paths, each path has a unique property in terms of delay spread and angular spread in the channel-state information. It looks like a fingerprint of a channel. By utilizing this property, it is possible to identify and modify the channel data contributed from the unwanted NLOS paths. Here, delay spread is defined as a profile that is composed of time-of-arrival (ToA) from different multipath components, and angular spread is defined as a profile that is composed of angle-of-arrival (AoA) from different multipath components.

According to embodiments herein, a method is provided that can mitigate the impacts of NLOS paths effectively and in the meantime isolate the AC error from the side effects of mitigation.

According to one aspect of embodiments herein, the object is achieved by a network node in a wireless communication system and method therein for estimating antenna calibration error in amplitude and phase. The network node comprises a plurality of antennas.

The network node receives a reference signal from a user equipment by the plurality of antennas. The reference signal is transmitted via a wireless communication channel with multiple propagation paths comprising a dominant path and one or more non-dominant paths between the network node and user equipment.

The network node estimates a channel-state information for each of the plurality of antennas based on the received reference signal from each antenna. The channel-state information is represented by a combined channel data matrix $H$ comprising channel data contributed from the wireless communication channel $H_{WL}$ with multiple paths and channel data contributed from antenna calibration error $H_{AC}$ between the plurality of antennas.

The network node applies a spatial-domain nulling filter to the combined channel data matrix $H$ to remove the channel data contributed from the wireless communication channel $H_{WL}$ with the non-dominant paths and obtain a modified channel data matrix $H'_{LOS}$.

The network node estimates the antenna calibration error based on the modified channel data matrix $H'_{LOS}$.

The dominant path and non-dominant path may be identified by a signal strength of the received reference signal. The signal strength of the received reference signal via the dominant path is stronger than the signal strength of each of the received reference signals via the non-dominant paths. The dominant path may comprise an LOS path and the non-dominant paths may comprise one or more NLOS paths. The dominant path may also be an NLOS path which is the strongest NLOS path among a number of NLOS paths, in the case where the LOS path is totally blocked by some obstacles.

Embodiment herein can remove the impairments of non-dominant paths in an efficient way. In the meantime, the channel data contributed from dominant path is unimpacted. To achieve this goal, the spatial-domain nulling filter is applied which comprises a set of processing applied sequentially to the combined channel data matrix $H$.

The set of processing of the spatial-domain nulling filter comprises: firstly, estimating angle-of-arrive (AoA) of the reference signal received by the plurality of antennas for the multiple paths to obtain a steering matrix $a(\theta_l, \Phi_l)$ for the plurality of antennas; secondly, determining a vector space for the dominant path $A_{LOS}$ and a vector space for one or more non-dominant paths $A_{NLOS}$ based on the steering matrix $a(\theta_l, \Phi_l)$; thirdly, calculating a projection matrix $E$ by projecting the vector space of the non-dominant paths $A_{NLOS}$ to the orthogonal space of the vector space of the dominant path $A_{LOS}$; fourthly, determining a first channel data matrix $H_{LOS}$ by removing the contribution of the projection matrix $E$ from the combined channel data matrix $H$; and finally, obtaining the modified channel data matrix $H'_{LOS}$ by rotating the first channel data matrix $H_{LOS}$ to a boresight position.

In other words, the spatial-domain nulling filter is a special filter that leverages the AoA of the reference signals received from the non-dominant paths to mitigate them. Compared to the well-known zero-forcing (ZF) or interference-rejection combining (IRC) filters, the proposed spatial-domain nulling filter can remove the components on the channel data contributed from the non-dominant paths, meanwhile minimizing the impact on the channel data contributed from the dominant path. This feature is crucial to keep the necessary information as much as possible for the followed processes.

The embodiments herein can mitigate the impairment inside in-field AC signals due to non-dominant paths. In the meantime, it can keep the channel data contributed from the dominant path and the channel data contributed from the antenna calibration error unimpacted. As a result, the accuracy and reliability of in-field AC is dramatically improved. Moreover, it can accelerate the converging rate of in-field AC, therefore enabling new applicable scenarios for in-field AC. For example, at the carrier initialization stage, it doesn't need to hold on for a long while just waiting for a converged result. It also makes in-field AC suitable for the cell served by the network node that doesn't have many active UEs. Moreover, it is possible to have runtime calibration to catch up the phase drifting inside the AAS radio. Together with in-field AC, the method according to embodiments herein can significantly improve the precision, efficiency, and resilience of cellular networks. Radio hardware supervision for other hardware impairments can also be enhanced from the purified channel data.

Moreover, if the NLOS mitigation is employed, the residual AC error can be quickly converged with only a few UEs. The overhead for OTA AC is reduced, thus empowering the network node with more capabilities for the future radio network.

Therefore, embodiments herein provide an improved method for antenna calibration of a network node with multiple antennas in a wireless communication system.

BRIEF DESCRIPTION OF THE DRAWINGS

Examples of embodiments herein are described in more detail with reference to the attached drawings in which:

Figure 1    is a schematic block diagram illustrating a typical environment for wireless communication with both LOS path and NLOS paths;

Figure 2    is a schematic block diagram illustrating a wireless communication system;

Figure 3    is a schematic block diagram illustrating resource elements of OFDM signal;

Figure 4    is a schematic view of coordinate system of uniform rectangular array;

Figure 5    (a) (b) are diagrams illustrating angular spectrum of received signals in a typical field test environment;

Figure 6    is a flow chart illustrating a method for estimating antenna calibration error according to embodiments herein;

Figure 7    shows delay spread of received signals from in-field test and an example time-domain filter (TDF) applied;

Figure 8    shows comparison of the estimated channel-state information before and after polynomial-fitting;

Figure 9    are flow charts illustrating methods for estimating antenna calibration error according to embodiments herein;

Figure 10   is a block diagram illustrating a network node in which a method for estimating antenna calibration error according to embodiments herein may be implemented;

Figure 11   shows comparison of the residual AC errors of each individual UE estimated from the channel data with and without the proposed NLOS mitigation in the scenario of LOS channels;

Figure 12   shows comparison of the residual AC errors of each individual UE estimated from the channel data with and without the proposed NLOS mitigation in the scenario of NLOS channels; and

Figure 13   shows comparison of the residual AC errors of multiple UEs estimated from the channel data with and without the proposed NLOS mitigation in the scenario of LOS and NLOS channels.

DETAILED DESCRIPTION

Embodiments herein relate to communications system in general. **Figure 2** is a schematic overview depicting **a communication system 200.** In a typical wireless communication system, wireless devices, also known as wireless communication devices, mobile stations, and/or user equipment (UE), communicate via a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a "NodeB" or "eNodeB" or "eNB" or "gNodeB" or "gNB". A service area or cell area is a geographical area where radio coverage is provided by the radio network node.

The communication system 200 may comprise one or more RANs. The communication system 200 may use a number of different technologies such as Global System for Mobile communications/enhanced Data rate for GSM Evolution (GSM/EDGE), Wideband Code Division Multiple Access (WCDMA), Worldwide Interoperability for Microwave Access (WiMax), Ultra Mobile Broadband (UMB), Wi-Fi, Long Term Evolution (LTE), LTE-Advanced, New Radio (NR) etc.,

just to mention a few possible implementations.

In the wireless communication system 200, one or more wireless communication devices **230, 231** such as a UE, a mobile station or a wireless terminal communicates via one or more RANs to one or more CNs. It should be understood by the skilled in the art that "wireless communication device" is a non-limiting term which means any terminal, wireless communication terminal, user equipment, Machine Type Communication (MTC) device, Device to Device (D2D) terminal, or any other nodes or devices in the wireless communication system 200, e.g. smart phone, laptop, mobile phone, sensor, relay, mobile tablets or even a small base station communicating within a cell.

Network nodes operate in the wireless communication system 200 such as **a network node 210.** The network node 210 may be any of RAN node, such as gNB, eNB, en-gNB, ng-eNB, gNB etc. The network node 210 provides radio coverage over a geographical area, a **service area 11,** which may also be referred to as a beam or a beam group where the group of beams is covering the service area of a radio access technology (RAT), such as 5G, LTE, NR or similar. The network node 210 may be a transmission and reception point e.g. a radio access network node such as a Wireless Local Area Network (WLAN) access point or an Access Point Station (AP STA), an access controller, a base station, e.g. a radio base station such as a NodeB, a gNodeB or gNB, an evolved Node B (eNB or eNodeB), a base transceiver station, a radio remote unit, an Access Point Base Station, a base station router, a transmission arrangement of a radio base station, a stand-alone access point or any other network unit capable of communicating with a wireless communication device within the service area served by the network node 210 depending e.g. on the radio access technology and terminology used.

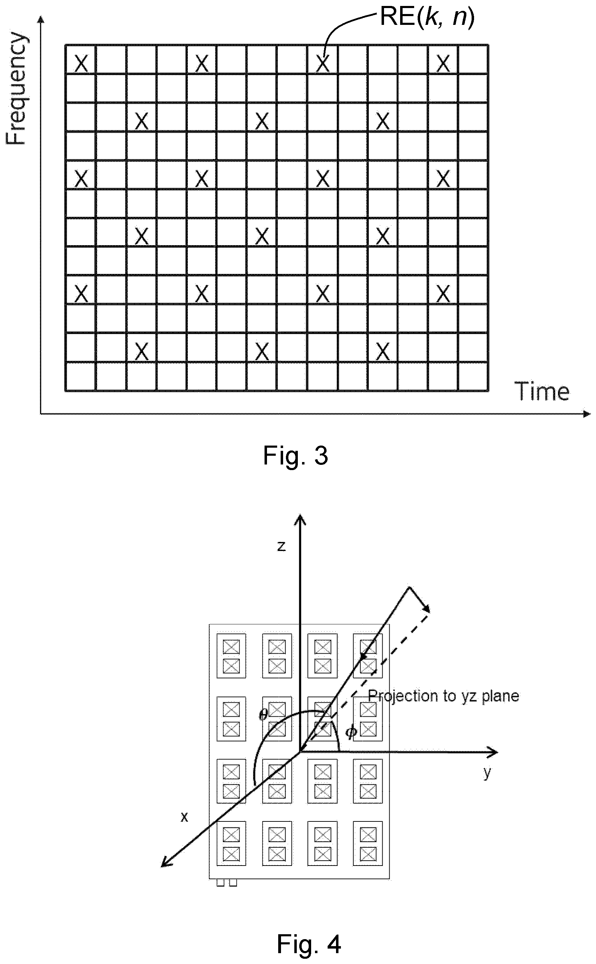

In order to describe and develop the embodiments herein for estimating antenna calibration error in amplitude and phase for a network node with multiple $M$ antennas e.g., the network node 210, a system model will be first developed and described for the wireless communication system 200. For modern wireless communication systems, orthogonal frequency-division multiplexing (OFDM) is a dominant data modulation due to its high spectral efficiency and low computational complexity. The disclosure is therefore described with reference to an OFDM based radio access network such as LTE or NR. **Figure 3** depicts resource elements (RE) of a OFDM signal in the time-frequency plane. The small box "□" indicates a RE, which is the smallest time-frequency resource over one subcarrier of a single OFDM symbol, i.e. one unit time-frequency resource per subcarrier per symbol. Not all REs are intent to deliver useful information. Some of them are retained to convey reference signal (RS), which is known at both transmitter and receiver. In Figure 3, where "x" denotes the RE that is designed for RS. After a signal is received, the receiver needs to estimate the channel-state information of the REs with the RS, then interpolate the channel-state information of the REs without the RS. This step is well-known for all OFDM developers, and the details are omitted here.

The channel-state information is estimated on a RE with a subcarrier $k$ and a symbol $n$, donated by RE $(k, n)$, where $k$ and $n$ are the index of subcarrier and symbol of the RE respectively. Suppose that the wireless communication channel on RE $(k, n)$ is denoted as $H_{WL}(k, n)$, the baseband equivalent model for the wireless communication channel $H_{WL}(k, n)$ can be written as

$$H_{WL}(k, n) = \sum_{l=0}^{L-1} \beta_l a(\theta_l, \phi_l) e^{-j2\pi k \Delta f \tau_l} e^{j2\pi n \Delta t v_l} \tag{1}$$

Where, $L$ denotes the number of resolvable paths, i.e., the multiple propagation paths comprising a dominant path and one or more non-dominant paths between the network node and user equipment. $\beta_l$, $\tau_l$ and $v_l$ are the baseband equivalent complex gain, time delay and Doppler frequency of channel $l$, respectively. $\Delta f$ denotes the subcarrier spacing, and $\Delta t$ denotes the symbol duration.

$H_{WL}(k, n)$ represents a vector containing all $M$ antennas at corresponding RE indexed by $(k, n)$, that is expressed as

$$H_{WL}(k, n) = [H_{WL}(k, n, 1) \quad H_{WL}(k, n, 2) \quad ... \quad H_{WL}(k, n, M)]^T \tag{2}$$

$a(\theta_l, \phi_l)$ represents the steering vector of an antenna array due to the angles $\theta_l$ and $\phi_l$. $\theta_l$ and $\phi_l$ are illustrated in **Figure 4,** wherein each antenna array comprises a plurality of antenna elements arranged in a specific geometric form, e.g. a Uniform Rectangular Array (URA). More details about $a(\theta_l, \phi_l)$ will be given later.

It is worth noting that an approximation is imposed on Eq. (1) where the inter-subcarrier interference due to Doppler effect is ignored. This is common in theoretic analysis and supposed to be true if the Doppler frequency is much smaller than the subcarrier spacing, i.e. $v_l \ll f$

The dominant path and non-dominant paths may be identified by a signal strength of the received reference signal. The signal strength of the received reference signal via the dominant path is stronger than the signal strength of each of the received reference signals via the non-dominant paths. The dominant path may be LOS path and the non-dominant paths may comprise one or more NLOS paths. The dominant path may also be an NLOS path which is the strongest NLOS path among a number of NLOS paths, in the case where the LOS path is totally blocked by some obstacles.

Without loss of generality, if the wireless communication channel doesn't contain the LOS path, the strongest NLOS path may be treated as the dominant path.

Besides the wireless communication channel $H_{WL}(k, n)$, the received signal also contains the internal errors due to hardware imperfection, e.g. the AC error between the multiple antennas, denoted by $H_{AC}(k, n)$, which is expressed as

$$H_{AC}(k, n) = [H_{AC}(k, n, 1) \quad H_{AC}(k, n, 2) \quad ... \quad H_{AC}(k, n, M)]^T \qquad (3)$$

Accordingly, a lumped or combined channel-state information $H(k, n)$ comprising the wireless channel $H_{WL}(k, n)$ and the AC error $H_{AC}(k, n)$ can be given by

$$H(k, n) = H_{AC}(k, n) \odot H_{WL}(k, n) \qquad (4)$$

Where, $\odot$ denotes the element-wise multiplication of two vectors.

It is noted that the channel estimation based on RS can only estimate $H(k, n)$, which is a combined channel data matrix comprising channel data contributed from the wireless communication channel $H_{WL}$ and channel data contributed from the antenna calibration error $H_{AC}$ between the plurality of antennas. To get the AC error $H_{AC}(k, n)$, it needs to separate it from $H(k, n)$. This is accomplished by exploiting the angular based model of $H_{WL}(k, n)$. As known, the incoming signals arrive at the antenna array from different angles with different delays. Therefore, $H_{WL}(k, n)$ appears like a few dots scattered in the angular spectrum of the received signals. As the antenna aperture size increases, the angular resolution increases as well, which makes the dots more distinguishable. On the other hand, $H_{AC}(k, n)$ is composed of random AC error over antennas. In the angular spectrum, it looks like the background noise. Due to their different properties in the angular spectrum, $H_{AC}(k, n)$ and $H_{WL}(k, n)$ can be separated without ambiguity.

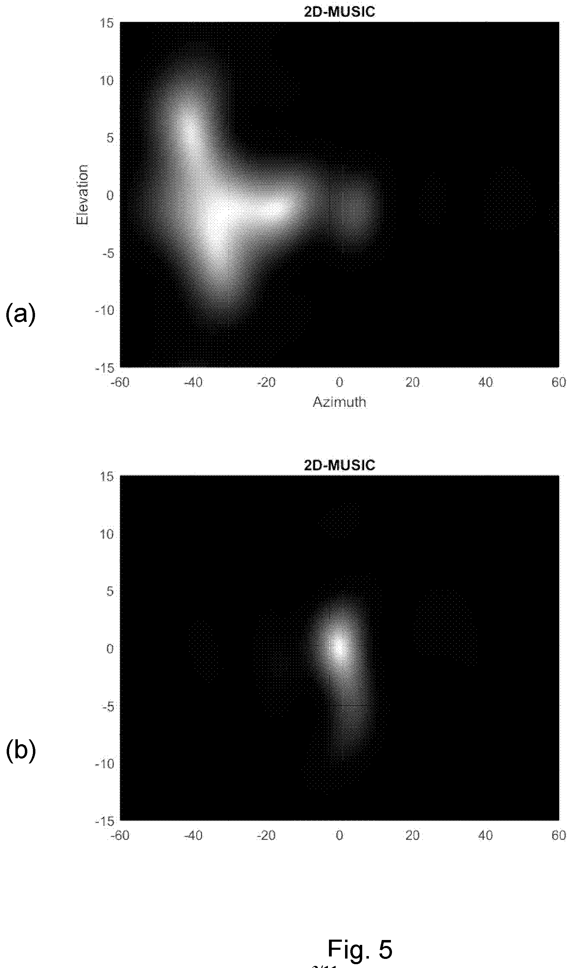

Noteworthily, the best wireless communication channel for such approach is supposed to contain one incoming signal from boresight position, i.e. one dot at the origin of the angular spectrum. However, this is not true in the real world. There may exist many incoming signals coming from unknown angles. **Figure 5 (a)** shows received signals from in-field test in the angular spectrum, where every incoming signal corresponds to one dot, and the brightness of the dot indicate the signal strength. Since the channel contains a lot of NLOS paths, there are lots of dots and the boundary between the dots are not clear, so the dots are connected together and appear like a bright area in Figure 5 (a), and the angular spectrum looks quite fuzzy. Indeed, there is no LOS path in this case as there is no obviously dominant path in the channel data. Due to that this is a very challenging for in-field AC and this is the problem the embodiments herein aim to solve.

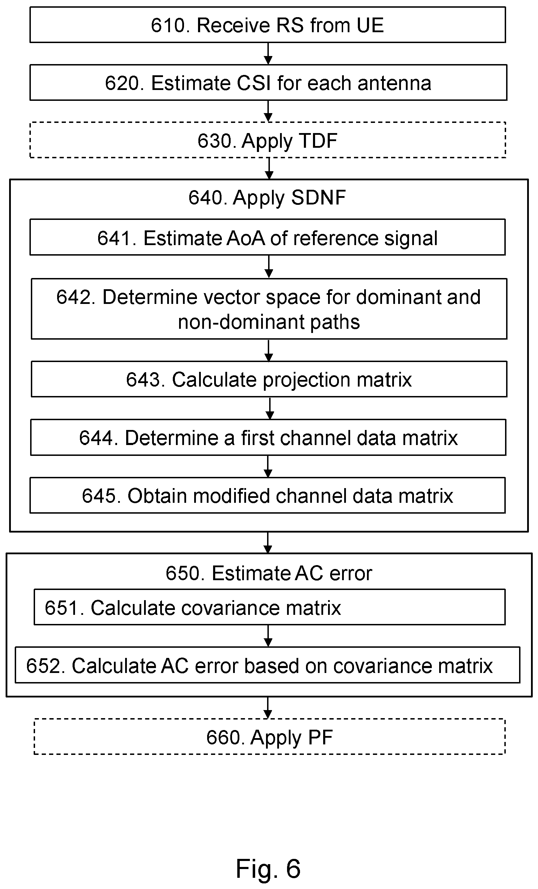

A method performed in a network node 210 for estimating antenna calibration error in amplitude and phase according to embodiments herein will be described with reference to **Figure 6.** As described above, examples of a network node include, but not limited to, access points (APs) e.g., radio access points, base stations (BSs) e.g., radio base stations, NodeBs, evolved NodeBs (eNBs) and NR NodeBs (gNBs). The method comprises the following actions or steps which may be performed in any suitable order.

**Action 610**

The network node 210 receives a reference signal from a user equipment 230 by the plurality of antennas. As described above, the reference signal is transmitted via a wireless communication channel with multiple propagation paths comprising a dominant path and one or more non-dominant paths between the network node 210 and user equipment 230.

**Action 620**

The network node 210 estimates a channel-state information for each of the plurality of antennas based on the received reference signal from each antenna. The channel-state information is represented by a combined channel data matrix $H$ comprising channel data contributed from the wireless communication channel $H_{WL}$ with multiple paths and channel data contributed from antenna calibration error $H_{AC}$ between the plurality of antennas.

The channel-state information is estimated for each of the plurality of antennas for the wireless communication channel on a subcarrier $k$ and a symbol $n$, where $k$ is the index of subcarrier and $n$ is the index of symbol. For simplicity, $(k, n)$ is omitted hereafter from all expressions, such as $H(k, n)$, $H_{WL}(k, n)$, $H_{AC}(k, n)$ etc.

**Action 630**

This action is operational. In order to improve accuracy, the network node 210 may apply a time-domain filter (TDF) to the combined channel data matrix $H$ to remove the channel data contributed by signals with a time delay outside a predefined time window.

To apply the TDF, the network node 210 first transforms the combined channel data matrix **H** for each antenna to a channel data matrix in time domain, and then applies the predefined time window to the channel data matrix in time domain to remove the channel data contributed by signals with a time delay outside the predefined time window.

The TDF is applied on each antenna individually. For OFDM symbol $n$ and antenna m, a vector $\boldsymbol{H}_t(n, m)$ may be defined as

$$\boldsymbol{H}_t(n, m) = [H(0, n, m) \quad H(1, n, m) \quad ... \quad H(K-1, n, m) \quad 0 \quad ... \quad 0]^T \qquad (5)$$

Actually, $\boldsymbol{H}_t(n, m)$ is the frequency-domain channel-state information with several padding zeros. As shown in Eq. (5), the length of $\boldsymbol{H}_t(n, m)$ is defined as $N_t$, which also represents the Fast Fourier Transform (FFT)/ Inverse Fast Fourier Transform (IFFT) size. There are $N_t - KK$ number of active subcarriers. Then, the IFFT of channel-state information can be written as

$$\boldsymbol{h}_t(n, m) = \mathrm{IFFT}\{\boldsymbol{H}_t(n, m)\} \qquad (6)$$

Where,

$$\boldsymbol{h}_t(n, m) = [h_t(0, n, m) \quad h_t(1, n, m) \quad ... \quad h_t(N_t - 1, n, m)]^T \qquad (7)$$

Denoting the index of dominant path by $I_t$, one can then set a window around the location of $I_t$ and filter out all components outside the window. Accordingly, the filtering can be expressed as

$$\widetilde{\boldsymbol{h}}_t(n, m) = \boldsymbol{w}_t \odot \boldsymbol{h}_t(n, m) \qquad (8)$$

The window function $\boldsymbol{w}_t$ is given by

$$\boldsymbol{w}_t(i) = \begin{cases} 1, & I_t - T_l \leq i \leq I_t + T_r \\ 0, & \text{Otherwise} \end{cases} \qquad (9)$$

Where, $T_l$ and $T_r$ denote the length of window at right side and left side, respectively. The total length of window is thus denoted as $T = T_l + T_r + Nt$, $T_l$ and $T_r$ can be adjusted according to the channel characteristics.

Here, the index $I_t$ that represents the delay of the dominant path is critical to the result. Searching of such delay may be done by delay estimation. A simple method is to find out the position of element in $\boldsymbol{h}_t(n, m)$ which has the maximum magnitude. This is called FFT based delay estimation. To achieve higher resolution, a subspace method such as MUltiple Signal Classification (MUSIC) may also be applied. MUSIC is a well-known algorithm used for efficient frequency spectrum analysis and radio direction finding. The MUSIC is therefore used in this disclosure without further describing it in detail.

Subsequently, a new channel data matrix $\tilde{H}_t(n, m)$ after TDF is computed by

$$\widetilde{H}_t(n, m) = \mathrm{FFT}\{\widetilde{\boldsymbol{h}}_t(n, m)\} \qquad (10)$$

The time-domain filtering is done on per antenna, whereas the delay is estimated only on one antenna. After the delay of the dominant path on this antenna is found, this delay value may be applied to all antennas. It is noted that the signal-to-noise ratio (SNR) may be enhanced by aggregating estimates over all antennas. But that may increase the complexity. In addition, since the radio unit is roughly calibrated, different delays may exist at different antennas. Thanks to the time alignment (TA) function, these delays are typically only a few samples. In the time-domain filtering, it normally covers much larger number of samples, for example 50 samples. For this reason, the impact of these delay differences can be ignorable.

As described above, when the TDF is applied, it transforms raw channel estimates on each antenna to a delay domain. The delay of the strongest signal is selected, and a window function is applied according to this delay. Signals with other delays are set to zero. It is noted that the window function is applied to each antenna individually, therefore no spatial selection is used.

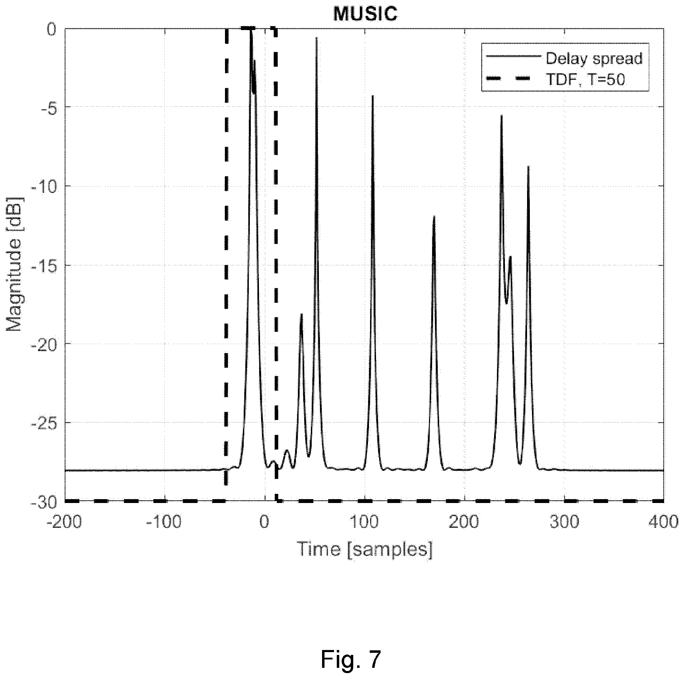

**Figure 7** depicts the delay spread of a channel acquired from an in-field measurement, and the TDF, indicated by dotted line, that is applied to the channel. The delay spread is estimated by MUSIC. It is seen that the channel contains several paths with different time delays. The highest one is selected as the dominant path, either LOS path or the strongest NLOS path, and a window is set around it. The components outside the window will be removed. This method can mitigate some unwanted NLOS paths so as to reduce the impact from these paths. However, if the NLOS paths are too close to the dominant path, they are difficult to be removed. Due to that, a spatial-domain nulling filter is applied which will be described in the following.

**Action 640**

The network node 210 applies a spatial-domain nulling filter (SDNF) to the combined channel data matrix $\boldsymbol{H}$ to remove the channel data contributed from the wireless communication channel $\boldsymbol{H}_{WL}$ with the non-dominant paths and obtain a modified channel data matrix $\boldsymbol{H}'_{LOS}$ .

If the TDF is applied to the combined channel data matrix $\boldsymbol{H}$, the spatial-domain nulling filter is applied to the new channel data matrix $\tilde{\boldsymbol{H}}_t(n, m)$ after the TDF is applied to the combined channel data matrix $\boldsymbol{H}$.

The process of applying SDNF will be described with the following actions or steps.

**Action 641**

The network node 210 estimates angle of arrive (AoA) of the reference signal received by the plurality of antennas for the multiple paths to obtain a steering matrix ($\boldsymbol{a}(\theta_l, \phi_l)$) for the plurality of antennas.

Before applying the SDNF, the AoA of all possible paths must be estimated in advance. This work may be accomplished by scanning the beam in the angular spectrum. Therefore, the method is also referred to as beam scan. However, such method has poor angular resolution, may not be able to distinguish two incoming signals from close angles. Due to that, a subspace method such as 2D-MUSIC may be used to provide high-resolution estimation. Therefore, according to some embodiments herein, an efficient 2D-MUSIC algorithm may be employed as the AoA estimation to find out the angles ($\theta_l, \phi_l$).

Typically, AAS radio exploits uniform rectangular array (URA) to cover both azimuth and elevation directions. Suppose that the geometry of URA is $M_r \times M_c$, $M_r$ and $M_c$ denote the number of antenna elements (AE) in rows and columns in each antenna, respectively. Accordingly, the antenna index m is split into row index $m_r$ and column index $m_c$. Noteworthily, since uniform linear array (ULA) is a special case of URA with $M_r = M_c = 1$, embodiments herein can cover ULA as well.

Here, the channel data matrix for RE ($k, n$) and AE ($m_r, m_c$) is denoted by $H(k, n, m_r, m_c)$, which is given by

$$H(k, n, m_r, m_c) = \sum_{l=0}^{L-1} \beta_l a(\theta_l, \phi_l) e^{-j2\pi k\Delta f\tau_l} e^{j2\pi n\Delta t v_l} \qquad (11)$$

$a(\theta_l, \phi_l)$ represents the phase on AE ($m_r, m_c$) due to the lagging of signals, which is given by

$$a(\theta_l, \phi_l) = e^{-j2\pi(m_r u_l + m_c v_l)} \qquad (12)$$

Where, the temporary variables are defined as

$$u_l = \frac{d_r \sin(\theta_p) \cos(\phi_p)}{\lambda}$$

$$v_l = \frac{d_c \sin(\theta_p) \sin(\phi_p)}{\lambda}$$

Note that the angles $\theta_l$ and $\phi_l$ are hidden in the variables $u_l$ and $v_l$. considering the variables $\beta_l$, $\tau_l$ and $v_l$ are irrelevant to the AE, it can therefore simplify Eq. (11) as

$$H(k, n, m_r, m_c) = \sum_{l=0}^{L-1} \gamma_l(k, n) a(\theta_l, \phi_l) \qquad (13)$$

Where,

$$\gamma_l(k, n) = \beta_l e^{-j2\pi k\Delta f\tau_l} e^{j2\pi n\Delta t v_l}$$

The channel-state information is the linear combination of delays, dopplers, and angles. Furthermore, the

steering matrix $a(\theta_l, \phi_l)$ of URA is defined as

$$a(\theta_l, \phi_l) = \begin{bmatrix} 1 & e^{-j2\pi 1v} & e^{-j2\pi 2v} & ... & e^{-j2\pi(M_c-1)v} \\ e^{-j2\pi 1u} & e^{-j2\pi(1u+1v)} & e^{-j2\pi(1u+2v)} & ... & e^{-j2\pi(1u+(M_c-1)v)} \\ e^{-j2\pi 2u} & e^{-j2\pi(2u+1v)} & e^{-j2\pi(2u+2v)} & ... & e^{-j2\pi(2u+(M_c-1)v)} \\ \vdots & \vdots & \vdots & \ddots & \vdots \\ e^{-j2\pi(M_r-1)u} & e^{-j2\pi((M_r-1)u+1v)} & e^{-j2\pi((M_r-1)u+2v)} & ... & e^{-j2\pi((M_r-1)u+(M_c-1)v)} \end{bmatrix}$$

$$(14)$$

Which is composed of the channel data of all receiving antennas. To facilitate the matrix computation, one defines the vectorization function vec{A} that can turn any matrix A into a vector. The operation is described as:

If $A = \begin{bmatrix} a_{11} & ... & a_{1c} \\ \vdots & \ddots & \vdots \\ a_{r1} & ... & a_{rc} \end{bmatrix}$, then vec{A} = $[a_{11} ... a_{r1} ... a_{1c} ... a_{rc}]^T$, in which A has a dimension of $r \times c$, vec{A} has a dimension of $rc \times 1$.

Incorporating above into Eq. (13), we have

$$H(k,n) = \sum_{l=0}^{L-1} \gamma_l(k,n) \, vec\{a(\theta_l, \phi_l)\} \qquad (15)$$

Where,

$$H(k,n) = vec\left\{ \begin{bmatrix} H(k,n,1,1) & ... & H(k,n,1,M_c) \\ \vdots & \ddots & \vdots \\ H(k,n,M_r,1) & ... & H(k,n,M_r,M_c) \end{bmatrix} \right\} \qquad (16)$$

Because the SDNF is applied on each RE individually, for simplicity, the index $(k, n)$ is omitted in the following exposition.

**Action 642**

When the AoA for L paths are known, the network node 210 determines a vector space for the dominant path $A_{LOS}$ and a vector space for one or more non-dominant paths $A_{NLOS}$ based on the steering matrix ($a(\theta_l, \phi_l)$).

For example, without loss of generality, it is assumed the first path $l = 0$ is the dominant path, and other paths $l > 0$ are the non-dominant paths. Define the vector space spanned by dominant path and non-dominant paths, which is given by

$$A_{LOS} = [\gamma_0 \, vec\{a(\theta_0, \phi_0)\}]$$

$$A_{NLOS} = [\gamma_1 vec\{a(\theta_1, \phi_1)\} \quad \gamma_2 \, vec\{a(\theta_2, \phi_2)\} \quad ... \quad \gamma_{L-1} \, vec\{a(\theta_{L-1}, \phi_{L-1})\}]$$

**Action 643**

The network node 210 calculates a projection matrix $E$ by projecting the vector space of the non-dominant paths $A_{NLOS}$ to the orthogonal space of the vector space of the dominant path $A_{LOS}$.

Projecting $A_{NLOS}$ to the orthogonal space of $A_{LOS}$, can be expressed as

$$E = A_{NLOS} - (A_{LOS}^H A_{LOS})^{-1}(A_{LOS} A_{LOS}^H A_{NLOS}) \qquad (17)$$

**Action 644**

The network node 210 determines a first channel data matrix $H_{LOS}$ by removing the contribution of the projection matrix $E$ from the combined channel data matrix $H$.

Removing the contribution of $E$ from $H$, can be expressed as

$$H_{LOS} = H - E(E^H E)^{-1}(E^H H) \tag{18}$$

To this end, the resulting channel data matrix $H_{LOS}$ only contains the channel data contributed from the dominant path.

**Action 645**

The network node 210 obtains the modified channel data matrix $H'_{LOS}$ by rotating the first channel data matrix $H_{LOS}$ to a boresight position, where the boresight is defined as the perpendicular to the face of an antenna array.

Rotating the angle of $H_{LOS}$ to boresight position as below, where $a^*_{LOS}$ is the conjugate of steering matrix of the dominant path.

$$H'_{LOS} = a^*_{LOS} H_{LOS}$$

**Figure 5(b)** shows the angular spectrum of received signals after application of the SDNF. It can be seen that the SDNF clearly filters out the unwanted non-dominant paths and keeps the strongest one. In the meantime, the background in the angular spectrum, i.e. the channel data contributed from the AC error, is almost unimpacted. This is a major advantage of the SDNF compared to the well-known ZF or IRC receivers. Moreover, the AoA of the dominant path is rotated to the boresight position, thus the pointing error is also compensated.

**Action 650**

The network node 210 estimates the antenna calibration error based on the modified channel data matrix $H'_{LOS}$. The estimated AC error comprises amplitude and phase errors.

Once $H'_{LOS}$ is obtained, the AC error $H_{AC}$ can be derived from $H'_{LOS}$ according to the following actions.

**Action 651**

The network node 210 calculates a covariance matrix $C(k)$ of the modified channel data matrix $H'_{LOS}$ at a subcarrier $k$ for the plurality of antennas.

The covariance matrix at the subcarrier k is defined as

$$C(k) = \sum_n H'_{LOS}(k,n) H'_{LOS}(k,n)^H \tag{19}$$

The covariance matrix $C(k)$ is computed at subcarrier $k$ but averaged over multiple symbols, wherein $n$ is the index of symbol.

On the other hand, $C(k)$ can also be written as

$$C(k) = \begin{bmatrix} c_{11}(k) & c_{12}(k) & c_{13}(k) & ... & c_{1M}(k) \\ c^*_{12}(k) & c_{22}(k) & c_{23}(k) & ... & c_{2M}(k) \\ c^*_{13}(k) & c^*_{23}(k) & c_{33}(k) & ... & c_{3M}(k) \\ \vdots & \vdots & ... & \ddots & \vdots \\ c^*_{1M}(k) & c^*_{2M}(k) & c^*_{3M}(k) & ... & c_{MM}(k) \end{bmatrix} \tag{20}$$

The covariance matrix $C(k)$ is for all antennas per subcarrier and has a dimension of $M \times M$, and $M$ is the number of antennas.

**Action 652**

The network node 210 calculates an antenna calibration error $e(k)$ for each antenna based on the covariance matrix $C(k)$.

The relative value of antenna $m$ with respect to the common value in the covariance matrix $C(k)$ can be given by

$$e_m(k) = \frac{c_{1m}(k)}{\frac{1}{M}\sum_i c_{1i}(k)}$$

Where, $i = 1, ... , M$. Note that $e_m(k)$ is a complex number. Actually, $e_m(k)$ is the estimation of AC error. Incorporating the AC error from all $M$ antennas, one gets

$$e(k) = [e_1(k) \quad e_2(k) \quad ... \quad e_M(k)]^T$$

It represents the estimated AC error at subcarrier $k$.

Therefore, according to embodiments herein, the network node 210 calculates an antenna calibration error $e(k)$ for each antenna by dividing a covariance value $c_{1m}(k)$ associated with an antenna in the covariance matrix $C(k)$ with an average covariance value of all antennas. The covariance value $c_{1m}(k)$ is associated with the antenna $m$ and is the value in the $m$ column and the first row of the covariance matrix $C(k)$ and the average covariance value of all antennas is the sum of all covariance values in the first row of the covariance matrix $C(k)$ divided by $M$, i.e. $\frac{1}{M}\sum_i c_{1i}(k)$ .

Action 660

The network node 210 applies a polynomial-fitting (PF) to the estimated antenna calibration error $e(k)$.

After the execution of TDF and SDNF, the channel data matrix $H'_{LOS}$ may still contain the interference from the non-dominant paths, resulting in worse estimation of AC error. Typically, it is difficult remove it by any filtering method. For this reason, the PF is used to further improve the quality of estimation.

As known, polynomial-fitting can be expressed as

$$y = a_0 + a_1 x + a_2 x^2 + \cdots + a_P x^P$$

Where, $P$ is the maximum polynomial order. $x$ denotes the subcarrier indices, i.e. $x = 1, ...,K$. $y$ denotes the estimated AC error, i.e. $e_m(k)$, $k = 1, ... , K$. Accordingly,

$$\begin{bmatrix} 1 & 1 & 1 & ... & 1 \\ 1 & 2 & 2^2 & ... & 2^P \\ 1 & 3 & 3^2 & ... & 3^P \\ \vdots & \vdots & \vdots & \ddots & \vdots \\ 1 & K & K^2 & ... & K^P \end{bmatrix} \begin{bmatrix} a_0 \\ a_1 \\ a_2 \\ \vdots \\ a_P \end{bmatrix} = \begin{bmatrix} e_m(1) \\ e_m(2) \\ e_m(3) \\ \vdots \\ e_m(K) \end{bmatrix} \qquad (21)$$

In the meantime, above equations can be rewritten as

$$Pa = e$$

The least-squares (LS) solution can be derived by

$$\tilde{a} = P^+ e$$

Where, $P^+$ denotes the pseudo-inverse of the matrix $P$.

Once the estimated coefficient $\tilde{a}$ is given, the AC error $e_m(k)$, $k = 1, ... , K$, can be recalculated by Eq. (21). Accordingly, it has less interference introduced by the wireless channel with non-dominant paths.

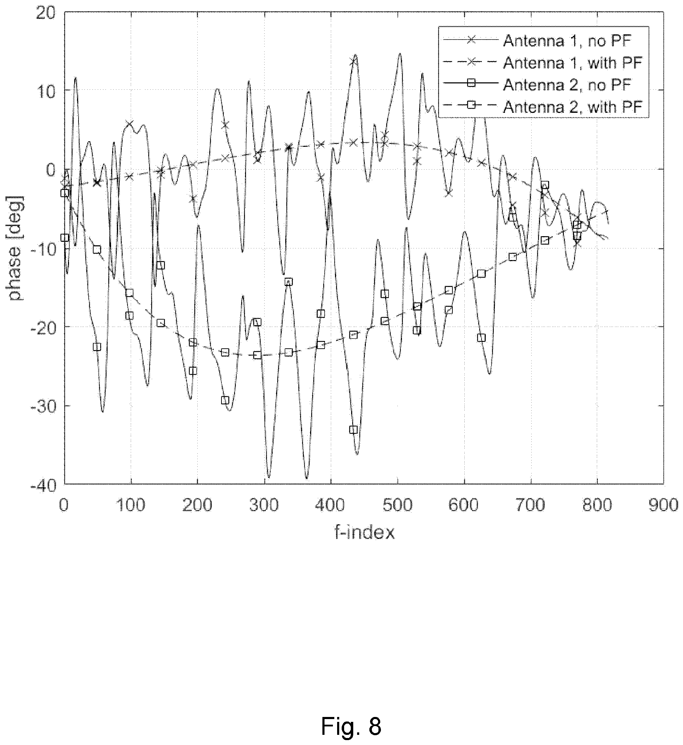

**Figure 8** shows the estimated channel-state information before and after the polynomial-fitting. The channel-state information of the same data as shown in Figures 5 and 7 is used. The channel data has been processed by TDF and SDNF. Only antenna 1 and 2 are shown in the figure, as two examples. Other antennas have the similar behaviour. It is seen that the estimation noise does exist on the channel-state information that causes large fluctuations. Note that the actual channel-state information due to radio hardware doesn't has such large fluctuations, i.e. it is relatively flat over the subcarriers. Due to that, an $P$-th order polynomial fitting is applied to the data to flatten the curve. The result of channel-state information after execution of PF is also shown in Figure 8, as a comparison against the original one. It can be seen that the channel-state information is flattened with PF. Therefore, by incorporating TDF, SDNF and PF, concrete result of AC error can be developed and delivered for in-field AC.

In above exposition, the AC error $e_m(k)$ is the estimation of single UE. It is possible to further improve the accuracy by averaging the results from multiple UEs. There are some alternatives to achieve this.

A first alternative is to estimate the AC error on each UE individually, then average the AC errors of multiple UEs.

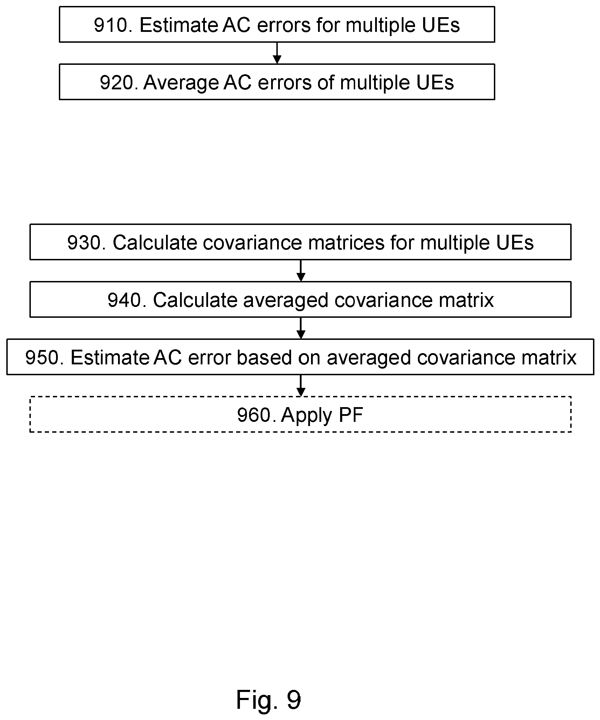

Therefore, according to some embodiments herein, the network node 210 may further perform the following actions, as depicted in **Figure 9:**

### Action 910

The network node 210 estimates antenna calibration errors $e_j(k)$ from channel data of a plurality of user equipment, wherein $j = 1, ... J$, $J$ is the number of user equipment. The network node 210 estimates the antenna calibration error for each UE by performing the Actions 610-650 described above. The network node may also perform Action 660, i.e. apply PF to each of the estimated antenna calibration error $e_j(k)$.

### Action 920

The network node 210 averages the antenna calibration errors estimated from the channel data of the plurality of user equipment to get the averaged AC error $e(k)$, i.e.

$$e(k) = \tfrac{1}{J}\sum_j e_j(k)$$

Antenna calibration errors are frequency dependent. For each subcarrier k, there is a $(1 \times M)$ vector for antenna calibration errors for all antennas. Suppose that there are $K$ subcarriers, i.e. $k = 1, ... K$, the whole matrix of antenna calibration errors will have a dimension of $J \times K \times M$. After averaging over multiple UEs, the averaged antenna calibration error matrix will have a dimension of $K \times M$, denoting $M$ antenna errors at $K$ subcarriers.

A second alternative is to average the covariance matrices of multiple UEs, then estimate the AC error based on the averaged covariance matrix.

Therefore, according to some embodiments herein, the network node 210 may estimate the antenna calibration error based on the modified channel-state information data matrix $H'_{LOS}$ by performing the following actions:

### Action 930

The network node 210 calculates covariance matrices $c_j(k)$ of the modified channel data matrix $H'_{LOS}$ for a plurality of user equipment, wherein $j = 1, ... J$, $J$ is the number of user equipment. Each covariance matrix $C_j(k)$ is calculated at a subcarrier $k$ for the plurality of antennas for each user equipment, and the covariance matrix $C_j(k)$ has a dimension of $M \times M$, where $M$ is the number of antennas. The network node 210 performs the Actions 610-640 including Actions 641-645 described above for the plurality of UEs to obtain a modified channel data matrix $H'_{LOS}$ for each UE.

### Action 940

The network node 210 calculates an averaged covariance matrix $C(k)$ by averaging the covariance matrices $C_j(k)$ of the plurality of user equipment, i.e. $C(k) = \tfrac{1}{J}\sum_j c_j(k)$ .

### Action 950

The network node 210 estimates the antenna calibration error $e(k)$ based on the averaged covariance matrix $C(k)$ by dividing a covariance value $c_{1m}(k)$ associated with an antenna in the averaged covariance matrix $C(k)$ with an average covariance value of all antennas. The covariance value $c_{1m}(k)$ is associated with the antenna m and is the value in the m column and the first row of the averaged covariance matrix $C(k)$ and the average covariance value of all antennas is the sum of all covariance values in the first row of the averaged covariance matrix $C(k)$ divided by $M$, i.e. $\tfrac{1}{M}\sum_i c_{1i}(k)$ .

**Action 960**

Operational, the network node 210 may apply a polynomial fitting to the estimated antenna calibration error.

As can be seen, the first alternative needs multiple polynomial fittings, but only needs one covariance matrix computation to get vector of *e*(*k*).The second alternative needs multiple covariance matrix computations of *C*(*k*), but only needs one polynomial fitting. The two alternatives are differed in the complexity but can achieve the same result. Selecting which one may depend on the size of covariance matrix, and the complexity of polynomial fitting.

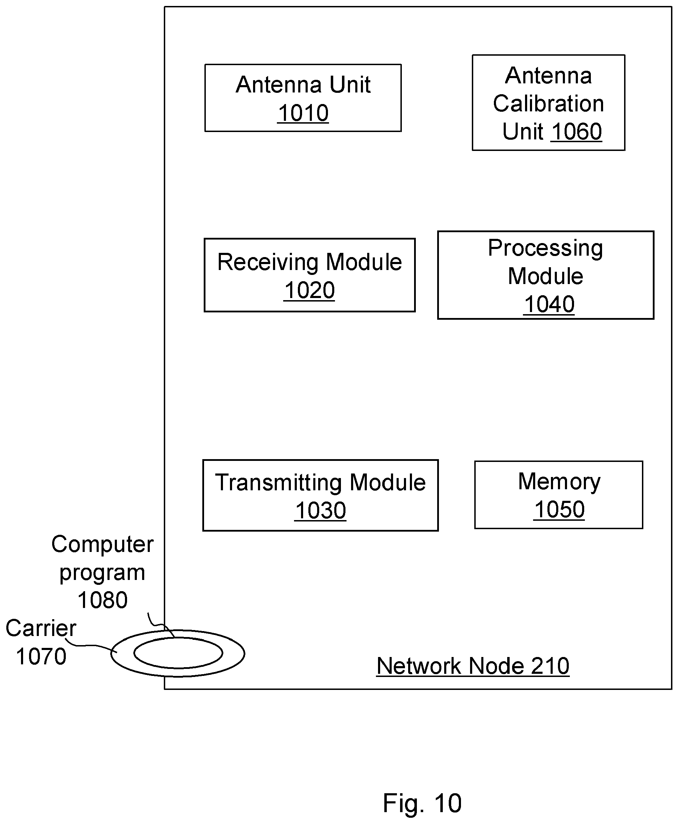

**Figure 10** shows an example of a network node **210** in which the method for estimating antenna calibration error may be implemented. The network node 210 may be a base station, for example, an eNB, gNB, eNodeB, gNodeB. The network node 210 may comprise an **antenna unit 1010** comprising a plurality of antennas, a **receiving module 1020** for receiving signals, a **transmitting module 1030** for transmitting signals, a **processing module 1040** for processing signals, and a **memory 1050** for storage data, instructions, configurations etc. The network node 210 may further comprise an **antenna calibration unit 1060** for calibrating the plurality of antennas using the estimated antenna calibration error. The method for estimating antenna calibration error may be implemented in the processing module 1040. The method for estimating antenna calibration error may also be implemented through one or more processors in the network node 210 together with computer program code for performing the functions and actions of the embodiments herein. The program code mentioned above may also be provided as a computer program product, for instance in the form of computer readable medium or a data carrier **1070** carrying computer program code or instructions **1080,** as shown in Figure 10, for performing the embodiments herein when being loaded into the network node 210. One such carrier may be in the form of a CD ROM disc. It is however feasible with other data carriers such as a memory stick. The computer program code may furthermore be provided as pure program code on a server or a cloud and downloaded to the network node 210.

The network node 210 is configured to perform the method Actions 610-660, Actions 641-645, Actions 651-652, Actions 910-920, Actions 930-960 described above.

For example, the network node 210 is configured to, e.g. by means of the receiving module 1020 being configured to, receive a reference signal from a user equipment by the plurality of antennas.

The network node 210 is configured to, e.g. by means of the processing module 1040 being configured to, estimate a channel-state information for each of the plurality of antennas based on the received reference signal from each antenna.

The network node 210 is configured to, e.g. by means of the processing module 1040 being configured to, apply a spatial-domain nulling filter to the combined channel data matrix to remove the channel data contributed from the wireless communication channel $H_{WL}$ with the non-dominant paths and obtain a modified channel data matrix $H'_{LOS}$ .

The network node 210 is configured to, by means of the processing module 1040 being configured to, estimate the antenna calibration error based on the modified channel data matrix $H'_{LOS}$ .

According to some embodiments herein, the method for estimating antenna calibration error may be implemented in a computer program product. The computer program product comprises instructions which when the program is executed by a computer, cause the computer to carry out the method for estimating antenna calibration error as described above.

To summarize, the processing steps and advantages of the method for estimating antenna calibration error using the proposed NLOS mitigation method described above are listed in the following:

(1) Time domain filtering (TDF):
This step transforms the raw channel estimates on each antenna to a time delay domain. The delay of the strongest path is selected, and a window function is applied according to this delay. Signals with other delays are set to zero. It is noted that the window function is applied to each antenna individually, therefore no spatial selection is used.
(2) Spatial domain nulling filtering (SDNF):
This step is using the signals from all antennas to estimate per RE a set of incoming signals. The strongest incoming signal is defined as the LOS component, and an algorithm to subtract all other incoming signals are presented.
(3) Rotation:
The channel data received via the LOS path is finally rotated to the boresight position. Hence the received signals on all antennas are expected to be equal. The channel-state information of a UE looks like a single LOS path from the boresight position. The AC error can be obtained from this processed channel-state information data matrix.
(4) Estimation of AC error:
Channel covariance matrix is calculated to compare signals at different antennas. The covariance matrix is calculated per subcarrier and averaged over all used symbols. Estimated deviations are the estimated AC error.
(5) Polynomial fitting (PF):
It is realistic to assume that the AC error to be calculated are slowly changing over frequency. Hence a polynomial fitting algorithm is used to further improve the estimate accuracy of AC error.

(6) Multi-UE averaging:

The estimated channel covariance matrices or AC errors are averaged over multiple UEs to further improve the accuracy. Normally, the result of a single UE can achieve a decent performance. However, it is better to repeat the above process for multiple UEs. The results of multiple UEs are then combined or averaged. Since the LOS paths of multiple UEs are added coherently after rotation, and the residual impactful NLOS paths of multiple UEs are added randomly, in the end the combined result can converge to the expected value with a reasonable accuracy.

The processing procedure and sequence from TDF, SDNF to PF can mitigate the impairment inside in-field AC signals due to non-dominant paths, e.g. NLOS paths. In the meantime, it can keep the dominant path, e.g. LOS path unimpacted. As a result, the accuracy and reliability of in-field AC is dramatically improved. Moreover, it can accelerate the converging rate of in-field AC, therefore enabling new applicable scenarios for in-field AC. For example, at the carrier initialization stage, it doesn't need to hold on for a long while just waiting for a converged result. It also makes in-field AC suitable for the cell that doesn't have many active UEs. Moreover, it is possible to have runtime calibration to catch up the phase drifting inside the AAS radio. Together with in-field AC, the proposed method can significantly improve the precision, efficiency, and resilience of cellular networks. Radio hardware supervision for the hardware impairment can also be enhanced from the purified channels and get the best performance.

To verify and illustrate advantages of the proposed NLOS mitigation method, a field test has been conducted employing a BS with an AAS radio installed on the roof of a building and many UEs distributed in a large area around the building. Throughout the field test, 100MHz NR signal operating at 4.9GHz carrier frequency is used. NR standard compliant uplink sounding reference signal (UL-SRS) is exploited to acquire the channel-state information. Specifically, there are some UEs that can establish the LOS connection with the BS, but there are some UEs that can only establish the connection via NLOS paths. In total, the field test has valid data from 29 UEs, in which the channels of 11 UEs are classified as LOS path, and the channels of other 18 UEs are classified as NLOS paths.

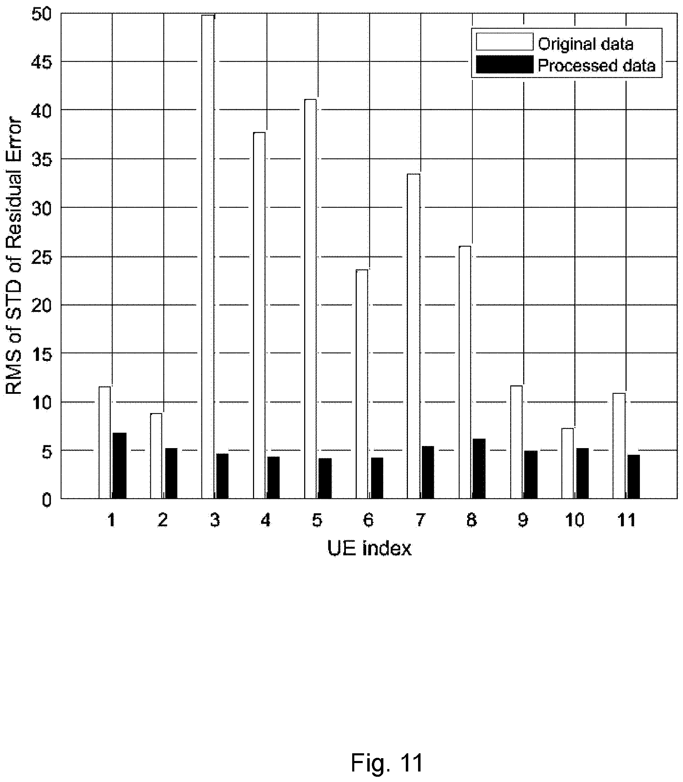

**Figure 11** shows comparison of residual AC error of UEs, where the metric of residual AC error between the original data and the processed data with the proposed method in the scenario of LOS path is compared. Note that even for the LOS path, there still exist several NLOS paths that can deteriorate the performance. The metric in the comparison is defined as "RMS of STD of Residual Error", which is given by $\mathrm{rms}(\mathrm{std}(e_k(m)))$, where $e_k(m)$ stands for the residual error of antenna $m$ at subcarrier $k$. std denotes standard deviation, rms denotes the root mean squares. The standard deviation is calculated over all antennas, and the root mean squares is calculated over all subcarriers. It is seen from Figure 11 that the proposed method can significantly reduce the impact due to NLOS paths.

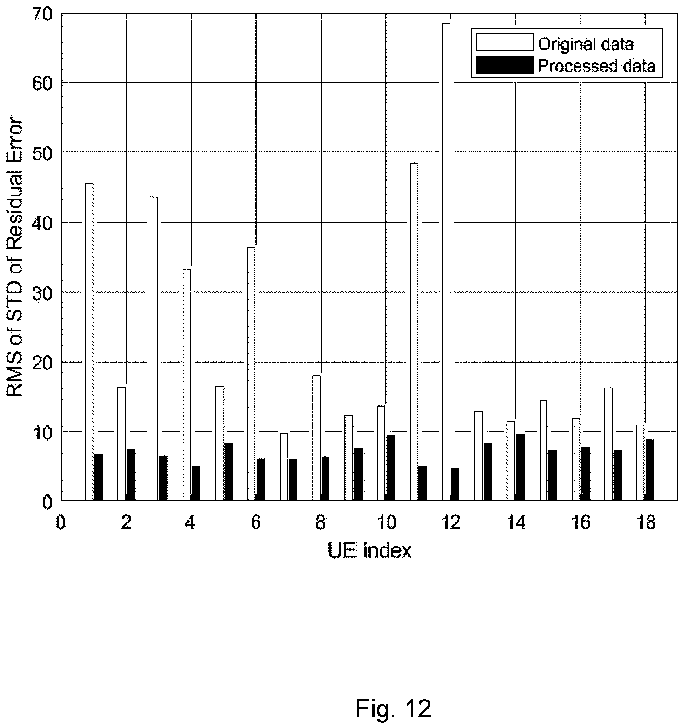

In **Figure 12,** the metric of residual AC error in the scenario of NLOS paths is plotted. Note that in this scenario, the channel doesn't have the LOS path, the residual AC error due to the impairment of NLOS paths is quite large. The strongest NLOS path is treated as the dominant path. It can be seen from Figure 12 that by applying the proposed method, the accuracy of estimation is dramatically improved. From Figure 11 and Figure 12, it is proved that no matter of what channel is endured by the UE, a minimum residual AC error is always retained by using the proposed method to process the channel data.

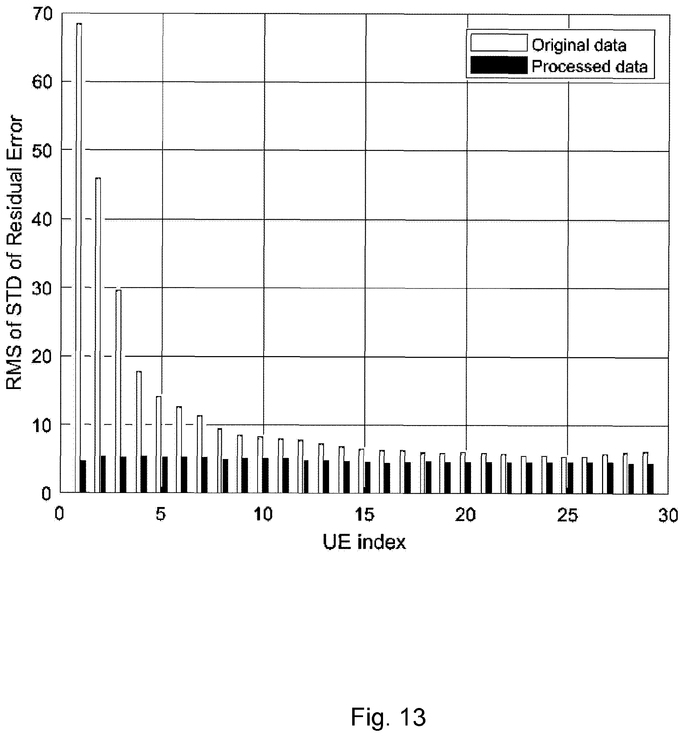

Multiple UEs combining may be used to mitigate the impact of NLOS paths. Since the LOS path or the main NLOS path of multiple UEs are coherently combined, and other NLOS paths are randomly combined, the resulting channel-state information can have less impact as well. **Figure 13** illustrates the result under such condition, without and with application of the proposed NLOS mitigation. For a fair competition, the order of UEs is randomized, hence the UE signal coming from favorable LOS path or non-favorable NLOS path is unknown. It is shown that with multiple UEs combining, a decent residual error can also be achieved even without the proposed NLOS mitigation. However, the drawback of such method is, it needs a lot of UEs to converge to required performance. For example, at least 25 UEs are needed as shown in the figure. This is not good for system initialization, especially hard when only a few UEs can be found in the network. It also means the network has to wait for a long while until enough number of UEs are reached. With the proposed NLOS mitigation, the convergence happens much quicker. Only a few UEs are needed to meet the requirement. After converging, other UEs can be further exploited to refine the result gradually, which doesn't impact the latency of system initialization. In short, converging rate and resulting accuracy are both improved if the proposed NLOS mitigation is applied.

The word "comprise" or "comprising", when used herein, shall be interpreted as non-limiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appended claims.

## Claims

**1.** A method performed by a network node in a wireless communication system for estimating antenna calibration error in amplitude and phase, wherein the network node comprises a plurality of antennas, the method comprising:

receiving (610) a reference signal from a user equipment by the plurality of antennas, wherein the reference signal is transmitted via a wireless communication channel with multiple propagation paths comprising a dominant path and one or more non-dominant paths between the network node and user equipment;

estimating (620) a channel-state information for each of the plurality of antennas based on the received reference signal from each antenna, wherein the channel-state information is represented by a combined channel data matrix H comprising channel data contributed from the wireless communication channel $H_{WL}$ with multiple paths and channel data contributed from antenna calibration error $H_{AC}$ between the plurality of antennas;

applying (640) a spatial-domain nulling filter to the combined channel data matrix H to remove the channel data contributed from the wireless communication channel $H_{WL}$ with the non-dominant paths and obtain a modified channel data matrix $H'_{LOS}$; and

estimating (650) the antenna calibration error based on the modified channel data matrix $H'_{LOS}$.

2. The method according to claim 1, wherein the dominant path and non-dominant path are identified by a signal strength of the received reference signal, and wherein the signal strength of the received reference signal via the dominant path is stronger than the signal strength of each of the received reference signals via the non-dominant paths.

3. The method according to any one of claims 1-2, wherein the dominant path comprises a line-of-sight, LOS, path and the non-dominant paths comprises non-line-of-sight, NLOS, paths.

4. The method according to any one of claims 1-2, wherein the dominant path comprises a non-line-of-sight, NLOS, path which is the strongest NLOS path among a number of the NLOS paths.

5. The method according to any one of claims 1-4, wherein estimating (620) a channel-state information for each of the plurality of antennas is performed for the wireless communication channel on a subcarrier $k$ and a symbol $n$, where $k$ is the index of subcarrier and $n$ is the index of symbol.

6. The method according to any one of claims 1-5, wherein applying (640) a spatial-domain nulling filter to the combined channel data matrix comprises:

estimating (641) angle of arrive of the reference signal received by the plurality of antennas for the multiple paths to obtain a steering matrix ($a(\theta_l, \phi_l)$) for the plurality of antennas;

determining (642) a vector space for the dominant path $A_{LOS}$ and a vector space for one or more non-dominant paths $A_{NLOS}$ based on the steering matrix ($a(\theta_l, \phi_l)$);

calculating (643) a projection matrix E by projecting the vector space of the non-dominant paths to the orthogonal space of the vector space of the dominant path;

determining (644) a first channel data matrix $H_{LOS}$ by removing the contribution of the projection matrix (E) from the combined channel data matrix H;

obtaining (645) the modified channel data matrix $H'_{LOS}$ by rotating the first channel data matrix $H_{LOS}$ to a boresight position.

7. The method according to any one of claims 1-6, further comprising applying (630) a time-domain filter to the combined channel data matrix H before applying the spatial-domain nulling filter, to remove the channel data contributed by signals with a time delay outside a predefined time window.

8. The method according to claim 7, wherein applying (630) a time-domain filter to the combined channel data matrix H comprises:

transforming the combined channel data matrix H for each antenna to a channel data matrix in time domain;

applying the predefined time window to the channel data matrix in time domain to remove the channel data contributed by signals with a time delay outside the predefined time window.

9. The method according to any one of claims 1-8, wherein estimating (650) the antenna calibration error based on the modified channel-state information data matrix $H'_{LOS}$ comprises:

calculating (651) a covariance matrix C(k) of the modified channel data matrix $H'_{LOS}$ at a subcarrier $k$ for the plurality of antennas, wherein the covariance matrix C(k) has a dimension of $M \times M$, and $M$ is the number of antennas;

calculating (652) an antenna calibration error e(k) for each antenna based on the covariance matrix C(k) by dividing a covariance value $c_{1m}(k)$ associated with an antenna in the covariance matrix C(k) with an average covariance value of all antennas, wherein the covariance value $c_{1m}(k)$ is associated with the antenna $m$ and is the value in the $m$ column and the first row of the covariance matrix C(k) and the average covariance value of all antennas is the sum of all covariance values in the first row of the covariance matrix C(k) divided by $M$,

$$\frac{1}{M}\sum_i c_{1i}(k)$$, wherein $i = 1, \dots , M$.

10. The method according to any one of claims 1-9, further comprising:
    applying (660) a polynomial fitting to the estimated antenna calibration error.

11. The method according to any one of claims 1-10, further comprising:

    estimating (910) antenna calibration errors from channel data of a plurality of user equipment;
    averaging (920) the antenna calibration errors estimated from the channel data of the plurality of user equipment.

12. The method according to any one of claims 1-8, wherein estimating (650) the antenna calibration error based on the modified channel-state information data matrix H'$_{LOS}$ comprises:

    calculating (930) covariance matrices $C_{j(k)}$ of the modified channel data matrix H'$_{LOS}$ for a plurality of user equipment, wherein $j = 1, \dots J$, $J$ is the number of user equipment, and each covariance matrix $C_j(k)$ is calculated at a subcarrier $k$ for the plurality of antennas for each user equipment, and each covariance matrix $C_j(k)$ has a dimension of $M \times M$, where $M$ is the number of antennas;
    calculating (940) an averaged covariance matrix C(k) by averaging the covariance matrices $C_j(k)$ of the plurality of user equipment;
    estimating (950) the antenna calibration error e(k) based on the average covariance matrix C(k) by dividing a covariance value $c_{1m}(k)$ associated with an antenna in the averaged covariance matrix C(k) with an average covariance value of all antennas, wherein the covariance value $c_{1m}(k)$ is associated with the antenna $m$ and is the value in the $m$ column and the first row of the averaged covariance matrix C(k)
    and the average covariance value of all antennas is the sum of all covariance values in the first row of the averaged covariance matrix C(k) divided by $M$,

$$\frac{1}{M}\sum_i c_{1i}(k),$$

    wherein $i = 1, \dots , M$; and
    applying (960) a polynomial fitting to the estimated antenna calibration error.

13. A network node (210) in a wireless communication system (200) for estimating antenna calibration error in amplitude and phase, wherein the network node (210) comprises a plurality of antennas, the network node (210) is configured to:

    receive a reference signal from a user equipment by the plurality of antennas, wherein the reference signal is transmitted via a wireless communication channel with multiple propagation paths comprising a dominant path and one or more non-dominant paths between the network node and user equipment;
    estimate a channel-state information for each of the plurality of antennas based on the received reference signal from each antenna, wherein the channel-state information is represented by a combined channel data matrix H comprising channel data contributed from the wireless communication channel H$_{WL}$ with multiple paths and channel data contributed from antenna calibration error H$_{AC}$ between the plurality of antennas;
    apply a spatial-domain nulling filter to the combined channel data matrix H to remove the channel data contributed from the wireless communication channel H$_{WL}$ with the non-dominant paths and obtain a modified channel data matrix H'$_{LOS}$ ; and
    estimate the antenna calibration error based on the modified channel data matrix H'$_{LOS}$.

14. The network node (210) according to claim 13 is further configured to perform the method according to any one of claims 2-12.

**15.** A computer program product (1070) comprising program code (1080) which when the program is executed by a computer, cause the computer to carry out the method according to any of claims 1-12.

**Patentansprüche**

**1.** Verfahren, das von einem Netzwerkknoten in einem drahtlosen Kommunikationssystem zur Schätzung des Antennenkalibrierungsfehlers in Amplitude und Phase durchgeführt wird, wobei der Netzwerkknoten eine Vielzahl von Antennen umfasst und das Verfahren Folgendes umfasst:

Empfangen (610) eines Referenzsignals von einer Benutzerausrüstung mittels der Vielzahl von Antennen, wobei das Referenzsignal über einen drahtlosen Kommunikationskanal mit mehreren Ausbreitungspfaden zwischen dem Netzwerkknoten und der Benutzerausrüstung übertragen wird, der einen dominanten Pfad und einen oder mehrere nicht-dominante Pfade umfasst;

Schätzen (620) einer Kanalzustandsinformation für jede der Vielzahl von Antennen auf der Grundlage des von jeder Antenne empfangenen Referenzsignals, wobei die Kanalzustandsinformation durch eine kombinierte Kanaldatenmatrix H dargestellt wird, die Kanaldaten umfasst, die vom drahtlosen Kommunikationskanal $H_{WL}$ mit mehreren Pfaden beigetragen werden, und Kanaldaten, die vom Antennenkalibrierungsfehler $H_{AC}$ zwischen der Vielzahl von Antennen beigetragen werden;

Anwenden (640) eines Nulling-Filters im Raumbereich auf die kombinierte Kanaldatenmatrix H, um die von dem drahtlosen Kommunikationskanal $H_{WL}$ mit den nicht-dominanten Pfaden beigetragenen Kanaldaten zu entfernen und eine modifizierte Kanaldatenmatrix $H'_{LOS}$ zu erhalten; und

Schätzen (650) des Antennenkalibrierungsfehlers auf der Grundlage der modifizierten Kanaldatenmatrix $H'_{LOS}$.

**2.** Verfahren nach Anspruch 1, wobei der dominante Pfad und der nicht-dominante Pfad durch eine Signalstärke des empfangenen Referenzsignals identifiziert werden und wobei die Signalstärke des über den dominanten Pfad empfangenen Referenzsignals stärker ist als die Signalstärke jedes der über die nicht-dominanten Pfade empfangenen Referenzsignale.

**3.** Verfahren nach einem der Ansprüche 1-2, wobei der dominante Pfad ein Sichtlinienpfad (LOS-Pfad) und die nicht-dominanten Pfade Nicht-Sichtlinienpfade (NLOS-Pfade) umfassen.

**4.** Verfahren nach einem der Ansprüche 1-2, wobei der dominante Pfad ein Nicht-Sichtlinienpfad (NLOS-Pfad) ist, der der stärkste NLOS-Pfad unter einer Reihe von NLOS-Pfaden ist.

**5.** Verfahren nach einem der Ansprüche 1-4, wobei das Schätzen (620) einer Kanalzustandsinformation für jede der Vielzahl von Antennen für den drahtlosen Kommunikationskanal auf einem Unterträger $k$ und einem Symbol $n$ durchgeführt wird, wobei $k$ der Index des Unterträgers und $n$ der Index des Symbols ist.

**6.** Verfahren nach einem der Ansprüche 1-5, wobei das Anwenden (640) eines Nulling-Filters im Raumbereich auf die kombinierte Kanaldatenmatrix Folgendes umfasst:

Schätzen (641) des Auftreffwinkels des von der Vielzahl von Antennen empfangenen Referenzsignals für die mehreren Pfade, um eine Steuermatrix ($a(\theta_l, \phi_l)$) für die Vielzahl von Antennen zu erhalten;

Bestimmen (642) eines Vektorraums für den dominanten Pfad $A_{LOS}$ und eines Vektorraums für einen oder mehrere nicht-dominante Pfade $A_{NLOS}$ auf der Grundlage der Steuermatrix ($a(\theta_l, \phi_l)$);

Berechnen (643) einer Projektionsmatrix E durch Projektion des Vektorraums der nichtdominanten Pfade auf den orthogonalen Raum des Vektorraums des dominanten Pfades;

Bestimmen (644) einer ersten Kanaldatenmatrix $H_{LOS}$ durch Entfernen des Beitrags der Projektionsmatrix ($E$) aus der kombinierten Kanaldatenmatrix H;

Erhalten (645) der modifizierten Kanaldatenmatrix $H'_{LOS}$ durch Drehung der ersten Kanaldatenmatrix $H_{LOS}$ in eine Mittelachsenposition.

**7.** Verfahren nach einem der Ansprüche 1-6, ferner umfassend das Anwenden (630) eines Zeitbereichsfilters auf die kombinierte Kanaldatenmatrix H vor dem Anwenden des Nulling-Filters im Raumbereich, um die von Signalen mit einer Zeitverzögerung außerhalb eines vordefinierten Zeitfensters beigetragenen Kanaldaten zu entfernen.

**8.** Verfahren nach Anspruch 7, wobei das Anwenden (630) eines Zeitbereichsfilters auf die kombinierte Kanaldatenmatrix H Folgendes umfasst:

Transformieren der kombinierten Kanaldatenmatrix H für jede Antenne in eine Kanaldatenmatrix im Zeitbereich;
Anwenden des vordefinierten Zeitfensters auf die Kanaldatenmatrix im Zeitbereich, um die Kanaldaten zu entfernen, die von Signalen mit einer Zeitverzögerung außerhalb des vordefinierten Zeitfensters beigetragen werden.

9. Verfahren nach einem der Ansprüche 1-8, wobei das Schätzen (650) des Antennenkalibrierungsfehlers auf der Grundlage der modifizierten Kanalzustandsinformationsmatrix $H'_{LOS}$ Folgendes umfasst:

Berechnen (651) einer Kovarianzmatrix C(k) der modifizierten Kanaldatenmatrix $H'_{LOS}$ an einem Unterträger $k$ für die Vielzahl von Antennen, wobei die Kovarianzmatrix C(k) eine Dimension $M \times M$ aufweist und M die Anzahl der Antennen ist;
Berechnen (652) eines Antennenkalibrierungsfehlers e(k) für jede Antenne auf der Grundlage der Kovarianzmatrix C(k), indem ein Kovarianzwert $c_{1m}(k)$, der einer Antenne in der Kovarianzmatrix C(k) zugeordnet ist, durch einen durchschnittlichen Kovarianzwert aller Antennen dividiert wird, wobei der Kovarianzwert $c_{1m}(k)$ der Antenne $m$ zugeordnet ist und der Wert in der Spalte m und der ersten Zeile der Kovarianzmatrix C(k) ist und der durchschnittliche Kovarianzwert aller Antennen die Summe aller Kovarianzwerte in der ersten Zeile der Kovarianzmatrix C(k) dividiert durch $M, \frac{1}{M}\Sigma_i c_{1i}(k)$ ,ist, wobei $i = 1, ..., M$.

10. Verfahren nach einem der Ansprüche 1-9, ferner umfassend:
Anwenden (660) einer Polynomanpassung auf den geschätzten Antennenkalibrierungsfehler.

11. Verfahren nach einem der Ansprüche 1-10, ferner umfassend:

Schätzen (910) der Antennenkalibrierungsfehler aus Kanaldaten einer Vielzahl von Benutzerausrüstung;
Mitteln (920) der aus den Kanaldaten der Vielzahl von Benutzerausrüstung geschätzten Antennenkalibrierungsfehler.

12. Verfahren nach einem der Ansprüche 1-8, wobei das Schätzen (650) des Antennenkalibrierungsfehlers auf der Grundlage der modifizierten Kanalzustandsinformationsmatrix $H'_{LOS}$ Folgendes umfasst:

Berechnen (930) von Kovarianzmatrizen $C_{j(k)}$ der modifizierten Kanaldatenmatrix $H'_{LOS}$ für eine Vielzahl von Benutzergeräten, wobei $j = 1, ... J, J$ die Anzahl der Benutzerausrüstung ist und jede Kovarianzmatrix $C_j(k)$ an einem Unterträger $k$ für die Vielzahl von Antennen für jedes Benutzerausrüstung berechnet wird und jede Kovarianzmatrix $C_j(k)$ die Dimension $M \times M$ aufweist, wobei $M$ die Anzahl der Antennen ist;
Berechnen (940) einer gemittelten Kovarianzmatrix C(k) durch Mittelung der Kovarianzmatrizen $C_j(k)$ der Vielzahl der Benutzerausrüstung;
Schätzen (950) des Antennenkalibrierungsfehlers e(k) auf der Grundlage der mittleren Kovarianzmatrix C(k) durch Division eines Kovarianzwertes $C_{1m}(k)$, der einer Antenne in der gemittelten Kovarianzmatrix C(k) zugeordnet ist, durch einen mittleren Kovarianzwert aller Antennen, wobei der Kovarianzwert $C_{1m}(k)$ der Antenne $m$ zugeordnet ist und der Wert in der Spalte $m$ und der ersten Zeile der gemittelten Kovarianzmatrix C(k) ist und der mittlere Kovarianzwert aller Antennen die Summe aller Kovarianzwerte in der ersten Zeile der gemittelten Kovarianzmatrix C(k) geteilt durch $M, \frac{1}{M}\Sigma_i c_{1i}(k)$ ist, wobei $i = 1, ... , M$; und
Anwenden (960) einer Polynomanpassung auf den geschätzten Antennenkalibrierungsfehler.

13. Netzwerkknoten (210) in einem drahtlosen Kommunikationssystem (200) zur Schätzung des Antennenkalibrierungsfehlers in Amplitude und Phase, wobei der Netzwerkknoten (210) eine Vielzahl von Antennen umfasst, wobei der Netzwerkknoten (210) konfiguriert ist, zum:

Empfangen eines Referenzsignals von einer Benutzerausrüstung mittels der Vielzahl von Antennen, wobei das Referenzsignal über einen drahtlosen Kommunikationskanal mit mehreren Ausbreitungspfaden zwischen dem Netzwerkknoten und der Benutzerausrüstung übertragen wird, der einen dominanten Pfad und einen oder mehrere nicht-dominante Pfade umfasst;
Schätzen einer Kanalzustandsinformation für jede der Vielzahl von Antennen auf der Grundlage des von jeder Antenne empfangenen Referenzsignals, wobei die Kanalzustandsinformation durch eine kombinierte Kanaldatenmatrix H dargestellt wird, die Kanaldaten umfasst, die vom drahtlosen Kommunikationskanal $H_{WL}$ mit mehreren Pfaden beigetragen werden, und Kanaldaten, die vom Antennenkalibrierungsfehler $H_{AC}$ zwischen der Vielzahl von Antennen beigetragen werden;

Anwenden eines Nulling-Filters im Raumbereich auf die kombinierte Kanaldatenmatrix H, um die vom drahtlosen Kommunikationskanal $H_{WL}$ mit den nicht-dominanten Pfaden beigetragenen Kanaldaten zu entfernen, und Erhalten einer modifizierten Kanaldatenmatrix $H'_{LOS}$; und Schätzen des Antennenkalibrierungsfehlers auf der Grundlage der modifizierten Kanaldatenmatrix $H'_{LOS}$.

**14.** Netzwerkknoten (210) nach Anspruch 13, ferner so konfiguriert, dass er das Verfahren nach einem der Ansprüche 2-12 durchführt.

**15.** Computerprogrammprodukt (1070), umfassend einen Programmcode (1080), der, wenn das Programm von einem Computer ausgeführt wird, den Computer veranlasst, das Verfahren nach einem der Ansprüche 1-12 durchzuführen.

## Revendications

**1.** Procédé réalisé par un nœud de réseau dans un système de communications sans fil pour estimer une erreur d'étalonnage d'antenne en amplitude et en phase, dans lequel le nœud de réseau comprend une pluralité d'antennes, le procédé comprenant :

la réception (610) d'un signal de référence provenant d'un équipement d'utilisateur par la pluralité d'antennes, dans lequel le signal de référence est transmis via un canal de communication sans fil avec de multiples chemins de propagation comprenant un chemin dominant et un ou plusieurs chemins non dominants entre le nœud de réseau et l'équipement d'utilisateur ;

l'estimation (620) d'une information d'état de canal pour chacune de la pluralité d'antennes sur la base du signal de référence reçu provenant de chaque antenne, dans lequel l'information d'état de canal est représentée par une matrice de données de canal combinée H comprenant des données de canal apportées par le canal de communication sans fil $H_{WL}$ avec de multiples chemins et des données de canal apportées par l'erreur d'étalonnage d'antenne $H_{AC}$ entre la pluralité d'antennes ;

l'application (640) d'un filtre d'annulation de domaine spatial à la matrice de données de canal combinée H pour supprimer les données de canal apportées par le canal de communication sans fil $H_{WL}$ avec les chemins non dominants et obtenir une matrice de données de canal modifiée $H'_{LOS}$ ; et

l'estimation (650) de l'erreur d'étalonnage d'antenne sur la base de la matrice de données de canal modifiée $H'_{LOS}$.

**2.** Procédé selon la revendication 1, dans lequel le chemin dominant et le chemin non dominant sont identifiés par une intensité de signal du signal de référence reçu, et dans lequel l'intensité de signal du signal de référence reçu via le chemin dominant est plus forte que l'intensité de signal de chacun des signaux de référence reçus via les chemins non dominants.

**3.** Procédé selon l'une quelconque des revendications 1-2, dans lequel le chemin dominant comprend un chemin en visibilité directe, LOS, et les chemins non dominants comprennent des chemins hors visibilité directe, NLOS.

**4.** Procédé selon l'une quelconque des revendications 1-2, dans lequel le chemin dominant comprend un chemin hors visibilité directe, NLOS, qui est le chemin NLOS le plus fort parmi un certain nombre des chemins NLOS.

**5.** Procédé selon l'une quelconque des revendications 1-4, dans lequel l'estimation (620) d'une information d'état de canal pour chacune de la pluralité d'antennes est réalisée pour le canal de communication sans fil sur une sous-porteuse k et un symbole *n,* où *k* est l'indice de sous-porteuse et *n* est l'indice de symbole.

**6.** Procédé selon l'une quelconque des revendications 1-5, dans lequel l'application (640) d'un filtre d'annulation de domaine spatial à la matrice de données de canal combinée comprend :

l'estimation (641) de l'angle d'arrivée du signal de référence reçu par la pluralité d'antennes pour les multiples chemins afin d'obtenir une matrice de braquage ($\boldsymbol{a}(\theta_l, \phi_l)$) pour la pluralité d'antennes ;

la détermination (642) d'un espace vectoriel pour le chemin dominant $A_{LOS}$ et d'un espace vectoriel pour un ou plusieurs chemins non dominants $A_{NLOS}$ sur la base de la matrice de braquage ($\boldsymbol{a}(\theta_l, \phi_l)$) ;

le calcul (643) d'une matrice de projection E en projetant l'espace vectoriel des chemins non dominants sur l'espace orthogonal de l'espace vectoriel du chemin dominant ;

la détermination (644) d'une première matrice de données de canal $H_{LOS}$ en supprimant la contribution de la matrice de projection (**E**) de la matrice de données de canal combinée H ;

l'obtention (645) de la matrice de données de canal modifiée $H'_{LOS}$ en faisant tourner la première matrice de données de canal $H_{LOS}$ jusqu'à une position de ligne de visée.

7. Procédé selon l'une quelconque des revendications 1-6, comprenant en outre l'application (630) d'un filtre de domaine temporel à la matrice de données de canal combinée H avant d'appliquer le filtre d'annulation de domaine spatial, afin de supprimer les données de canal apportées par des signaux avec un délai en dehors d'une fenêtre temporelle prédéfinie.

8. Procédé selon la revendication 7, dans lequel l'application (630) d'un filtre de domaine temporel à la matrice de données de canal combinée H comprend :

la transformation de la matrice de données de canal combinée H pour chaque antenne en une matrice de données de canal dans le domaine temporel ;

l'application de la fenêtre temporelle prédéfinie à la matrice de données de canal dans le domaine temporel pour supprimer les données de canal apportées par des signaux avec un délai en dehors de la fenêtre temporelle prédéfinie.

9. Procédé selon l'une quelconque des revendications 1-8, dans lequel l'estimation (650) de l'erreur d'étalonnage d'antenne sur la base de la matrice de données d'information d'état de canal modifiée $H'_{LOS}$ comprend :

le calcul (651) d'une matrice de covariance C(k) de la matrice de données de canal modifiée $H'_{LOS}$ au niveau d'une sous-porteuse *k* pour la pluralité d'antennes, dans lequel la matrice de covariance C(k) présente une dimension de $M \times M$, et M est le nombre d'antennes ;

le calcul (652) d'une erreur d'étalonnage d'antenne e(k) pour chaque antenne sur la base de la matrice de covariance C(k) en divisant une valeur de covariance $c_{1m}(k)$ associée à une antenne dans la matrice de covariance C(k) par une valeur de covariance moyenne de toutes les antennes, dans lequel la valeur de covariance $c_{1m}(k)$ est associée à l'antenne *m* et est la valeur dans la colonne *m* et la première ligne de la matrice de covariance C(k) et la valeur de covariance moyenne de toutes les antennes est la somme de toutes les valeurs de covariance dans la première ligne de la matrice de covariance C(k) divisée par $M, \frac{1}{M} \Sigma_i c_{1i}(k)$, dans lequel *i* = 1, ... , *M*.

10. Procédé selon l'une quelconque des revendications 1-9, comprenant en outre :
l'application (660) d'un ajustement polynomial à l'erreur d'étalonnage d'antenne estimée.

11. Procédé selon l'une quelconque des revendications 1-10, comprenant en outre :

l'estimation (910) d'erreurs d'étalonnage d'antenne à partir de données de canal d'une pluralité d'équipements d'utilisateur ;

la moyenne (920) des erreurs d'étalonnage d'antenne estimées à partir des données de canal de la pluralité d'équipements d'utilisateur.

12. Procédé selon l'une quelconque des revendications 1-8, dans lequel l'estimation (650) de l'erreur d'étalonnage d'antenne sur la base de la matrice de données d'information d'état de canal modifiée $H'_{LOS}$ comprend :

le calcul (930) de matrices de covariance $C_{j(k)}$ de la matrice de données de canal modifiée $H'_{LOS}$ pour une pluralité d'équipements d'utilisateur, dans lequel *j* = 1, ...*J, J* est le nombre d'équipements d'utilisateur, et chaque matrice de covariance $C_j(k)$ est calculée au niveau d'une sous-porteuse *k* pour la pluralité d'antennes pour chaque équipement d'utilisateur, et chaque matrice de covariance $C_j(k)$ présente une dimension de $M \times M$, où *M* est le nombre d'antennes ;

le calcul (940) d'une matrice de covariance moyennée C(k) en moyennant les matrices de covariance $C_j(k)$ de la pluralité d'équipements d'utilisateur ;

l'estimation (950) de l'erreur d'étalonnage d'antenne e(k) sur la base de la matrice de covariance moyenne C(k) en divisant une valeur de covariance $c_{1m}(k)$ associée à une antenne dans la matrice de covariance moyennée C(k) par une valeur de covariance moyenne de toutes les antennes, dans lequel la valeur de covariance $c_{1m}(k)$ est associée à l'antenne $m$ et est la valeur dans la colonne $m$ et la première ligne de la matrice de covariance moyennée C(k) et la valeur de covariance moyenne de toutes les antennes est la somme de toutes les valeurs de covariance dans la première ligne de la matrice de covariance moyennée C(k) divisée par $M, \frac{1}{M} \Sigma_i c_{1i}(k)$, dans lequel $i = 1, \dots, M$ ; et

l'application (960) d'un ajustement polynomial à l'erreur d'étalonnage d'antenne estimée.

13. Nœud de réseau (210) dans un système de communications sans fil (200) pour estimer une erreur d'étalonnage d'antenne en amplitude et en phase, dans lequel le nœud de réseau (210) comprend une pluralité d'antennes, le nœud de réseau (210) est configuré pour :

recevoir un signal de référence provenant d'un équipement d'utilisateur par la pluralité d'antennes, dans lequel le signal de référence est transmis via un canal de communication sans fil avec de multiples chemins de propagation comprenant un chemin dominant et un ou plusieurs chemins non dominants entre le nœud de réseau et l'équipement d'utilisateur ;

estimer une information d'état de canal pour chacune de la pluralité d'antennes sur la base du signal de référence reçu provenant de chaque antenne, dans lequel l'information d'état de canal est représentée par une matrice de données de canal combinée H comprenant des données de canal apportées par le canal de communication sans fil $H_{WL}$ avec de multiples chemins et des données de canal apportées par l'erreur d'étalonnage d'antenne $H_{AC}$ entre la pluralité d'antennes ;

appliquer un filtre d'annulation de domaine spatial à la matrice de données de canal combinée H pour supprimer les données de canal apportées par le canal de communication sans fil $H_{WL}$ avec les chemins non dominants et obtenir une matrice de données de canal modifiée $H'_{LOS}$ ; et estimer l'erreur d'étalonnage d'antenne sur la base de la matrice de données de canal modifiée $H'_{LOS}$.

14. Nœud de réseau (210) selon la revendication 13 en outre configuré pour réaliser le procédé selon l'une quelconque des revendications 2-12.

15. Produit de programme informatique (1070) comprenant un code de programme (1080) qui, lorsque le programme est exécuté par un ordinateur, amène l'ordinateur à effectuer le procédé selon l'une quelconque des revendications 1-12.

Fig. 1

Fig. 2

Fig. 3

Fig. 4

(a)

(b)

Fig. 5

```
┌─────────────────────────────────────────────────┐
│            610. Receive RS from UE                │
└─────────────────────────────────────────────────┘
                        │
                        ▼
┌─────────────────────────────────────────────────┐
│         620. Estimate CSI for each antenna        │
└─────────────────────────────────────────────────┘
                        │
                        ▼
┌─ ─ ─ ─ ─ ─ ─ ─ ─ ─ ─ ─ ─ ─ ─ ─ ─ ─ ─ ─ ─ ─ ─ ─ ┐
             630. Apply TDF
└─ ─ ─ ─ ─ ─ ─ ─ ─ ─ ─ ─ ─ ─ ─ ─ ─ ─ ─ ─ ─ ─ ─ ─ ┘
                        │
                        ▼
┌─────────────────────────────────────────────────┐
│                640. Apply SDNF                    │
│  ┌─────────────────────────────────────────────┐ │
│  │    641. Estimate AoA of reference signal     │ │
│  └─────────────────────────────────────────────┘ │
│                      │                            │
│                      ▼                            │
│  ┌─────────────────────────────────────────────┐ │
│  │  642. Determine vector space for dominant and │ │
│  │           non-dominant paths                  │ │
│  └─────────────────────────────────────────────┘ │
│                      │                            │
│                      ▼                            │
│  ┌─────────────────────────────────────────────┐ │
│  │       643. Calculate projection matrix        │ │
│  └─────────────────────────────────────────────┘ │
│                      │                            │
│                      ▼                            │
│  ┌─────────────────────────────────────────────┐ │
│  │    644. Determine a first channel data matrix │ │
│  └─────────────────────────────────────────────┘ │
│                      │                            │
│                      ▼                            │
│  ┌─────────────────────────────────────────────┐ │
│  │   645. Obtain modified channel data matrix    │ │
│  └─────────────────────────────────────────────┘ │
└─────────────────────────────────────────────────┘
                        │
                        ▼
┌─────────────────────────────────────────────────┐
│               650. Estimate AC error              │
│  ┌─────────────────────────────────────────────┐ │
│  │       651. Calculate covariance matrix        │ │
│  └─────────────────────────────────────────────┘ │
│                      │                            │
│                      ▼                            │
│  ┌─────────────────────────────────────────────┐ │
│  │ 652. Calculate AC error based on covariance   │ │
│  │              matrix                           │ │
│  └─────────────────────────────────────────────┘ │
└─────────────────────────────────────────────────┘
                        │
                        ▼
┌─ ─ ─ ─ ─ ─ ─ ─ ─ ─ ─ ─ ─ ─ ─ ─ ─ ─ ─ ─ ─ ─ ─ ─ ┐
              660. Apply PF
└─ ─ ─ ─ ─ ─ ─ ─ ─ ─ ─ ─ ─ ─ ─ ─ ─ ─ ─ ─ ─ ─ ─ ─ ┘
```

Fig. 6

Fig. 7

Fig. 8

910. Estimate AC errors for multiple UEs

920. Average AC errors of multiple UEs

930. Calculate covariance matrices for multiple UEs

940. Calculate averaged covariance matrix

950. Estimate AC error based on averaged covariance matrix

960. Apply PF

Fig. 9

| Antenna Unit 1010 | Antenna Calibration Unit 1060 |
| Receiving Module 1020 | Processing Module 1040 |
| Transmitting Module 1030 | Memory 1050 |

Computer program 1080

Carrier 1070

Network Node 210

Fig. 10

Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **I. GUVENC ; C.-C. CHONG**. A Survey on TOA Based Wireless Localization and NLOS Mitigation Techniques. *IEEE Communications Surveys Tutorials*, 2009, vol. 11 (3), 107-124